# EUROPEAN PATENT SPECIFICATION

(11) **EP 4 218 425 B1**
(45) Date of publication and mention of the grant of the patent: **13.08.2025**
(21) Application number: 23152717.7
(22) Date of filing: 20.01.2023
(51) Int. Cl.: A23G 9/12, A23G 9/22, A23G 9/28, A23G 9/30, A23L 5/10, A23P 30/40, B01F 27/70, B01F 27/90, B01F 35/95, H05B 6/36

(54) **MACHINE FOR PROCESSING LIQUID OR SEMI-LIQUID FOOD PRODUCTS AND METHOD FOR PROCESSING LIQUID OR SEMI-LIQUID FOOD PRODUCTS**
MASCHINE ZUR VERARBEITUNG VON FLÜSSIGEN ODER HALBFLÜSSIGEN LEBENSMITTELPRODUKTEN UND VERFAHREN ZUR VERARBEITUNG VON FLÜSSIGEN ODER HALBFLÜSSIGEN LEBENSMITTELPRODUKTEN.
MACHINE DE TRAITEMENT DE PRODUITS ALIMENTAIRES LIQUIDES OU SEMI-LIQUIDES ET PROCÉDÉ DE TRAITEMENT DE PRODUITS ALIMENTAIRES LIQUIDES OU SEMI-LIQUIDES.

(30) Priority: 26.01.2022 IT 202200001304
(43) Date of publication of application: 02.08.2023
(73) Proprietor: Ali Group S.r.l., 20063 Cernusco sul Naviglio (MI) (IT)
(72) Inventor: TASSI, Federico, 40122 BOLOGNA (IT); LAZZARINI, Roberto, 42100 REGGIO EMILIA (IT)
(74) Representative: Milli, Simone

(56) References cited:
- EP-A1- 1 787 944
- EP-A1- 3 718 409
- WO-A1-2014/075923
- IT-A1- UA20 162 706
- US-A1- 2013 344 204
- US-A1- 2018 064 281
- US-A1- 2020 060 318

## Description

This invention relates to a machine for processing liquid or semi-liquid food products (in particular, thermally) and to a method for treating a liquid or semi-liquid food product in the machine, according to appended claims 1 and 7 respectively.

This invention relates, in particular, to an apparatus such as a pasteurizer, a cooker or a multifunction/combination machine which can perform both pasteurization and creaming in the same container, etc.

Prior art machines comprise a product containing element in which the mixture to be processed is placed and set in rotation by a stirrer.

These machines also comprise a thermodynamic system integrated in the machine to allow thermally processing the product to be dispensed.

Generally speaking, thermodynamic systems comprise a closed circuit (provided with different thermodynamic elements) in which a heat exchanger fluid circulates in order to exchange heat with the container so as to heat the container and thus allow the product to be thermally processed.

Disadvantageously, prior art machines provided with thermodynamic systems are not particularly efficient in that they require a large amount of energy to obtain the heat necessary for thermally processing the product. Moreover, these thermodynamic systems are not easy to adjust and the machines are therefore not very flexible with respect to products of different kinds, which require specific processes according to predetermined heating curves. US 2018/064281 A1 discloses a cooking appliance comprising inter alia a housing with a cooking receptacle and a stirring means that can be heated by inductive heating.

There is therefore a need to thermally process liquid or semi-liquid food products, in particular by heating, in a more energy-efficient manner, so as to reduce the environmental impact of the process.

The aim of this invention is to meet at least the above mentioned need by providing a machine for processing liquid or semi-liquid food products, capable of thermally processing the food product in a particularly efficient manner, and a method for processing food in the machine.

The technical features of the invention, with reference to the above aim, are clearly described in the claims below and its advantages are apparent from the detailed description which follows, with reference to the accompanying drawings which illustrate an exemplary, hence non-limiting embodiment of the invention and in which:
- Figure 1 shows a perspective view of a machine for processing liquid or semi-liquid food products according to this disclosure;
- Figure 2 schematically illustrates a first embodiment, which is outside the subject-matter of the claims, of an operating circuit applicable to the machine of Figure 1;
- Figure 3 schematically illustrates a second embodiment of an operating circuit applicable to the machine of Figure 1;

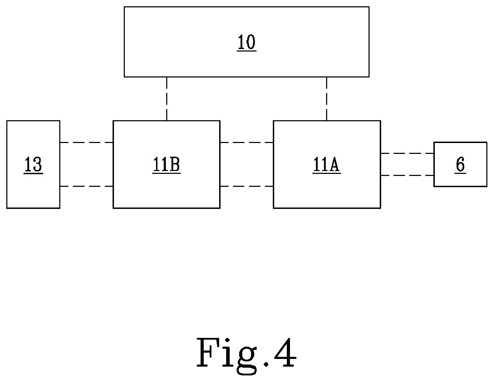

- Figure 4 schematically represents a part of the operating circuit of Figure 2 or 3.

With reference to the accompanying drawings, the numeral 1 denotes a machine for making and dispensing liquid or semi-liquid food products according to this invention.

The machine 1 allows making different kinds of liquid or semi-liquid products such as, for example, bakery and confectionery products, creams, soups and the like.

The machine 1 comprises a container 2 for thermally processing liquid or semi-liquid food products and provided with walls 2A, 2B and an outlet 3. The machine 1 may be, for example, a pasteurizer, a cooker or a multifunction/combination machine which can perform both pasteurization and creaming in the same container 2.

Advantageously, the thermal processes facilitate the storage and safety of the processed foods by reducing oxidation of the end product.

The machine 1 comprises a dispenser 14 for dispensing the processed product.

The dispenser 14 is connected to the outlet 3 and is provided with a closing element (not illustrated) which is movable to open or close the outlet 3 when the product needs to be dispensed.

After undergoing the necessary thermal processes in the container 2, the product passes through the outlet 3 and can be dispensed through the dispenser 24.

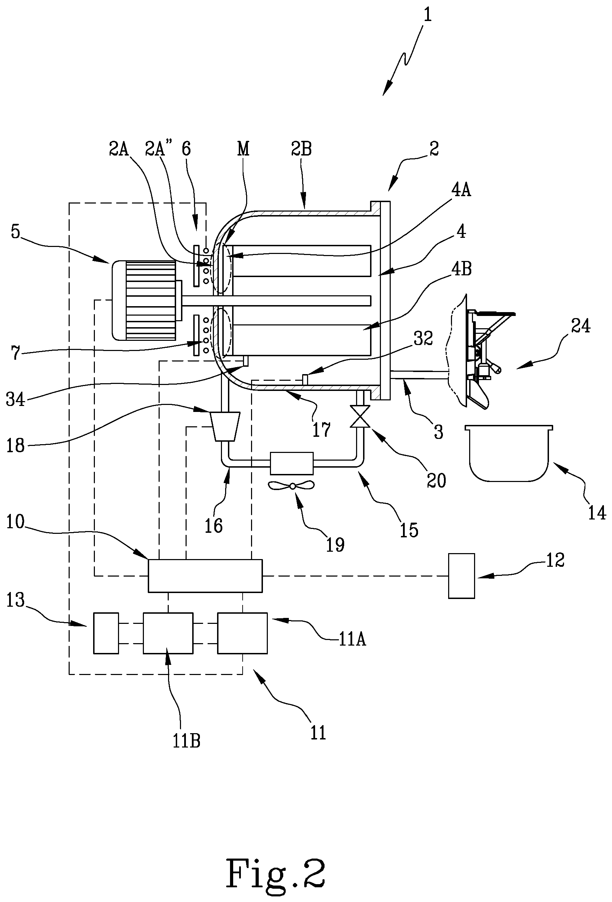

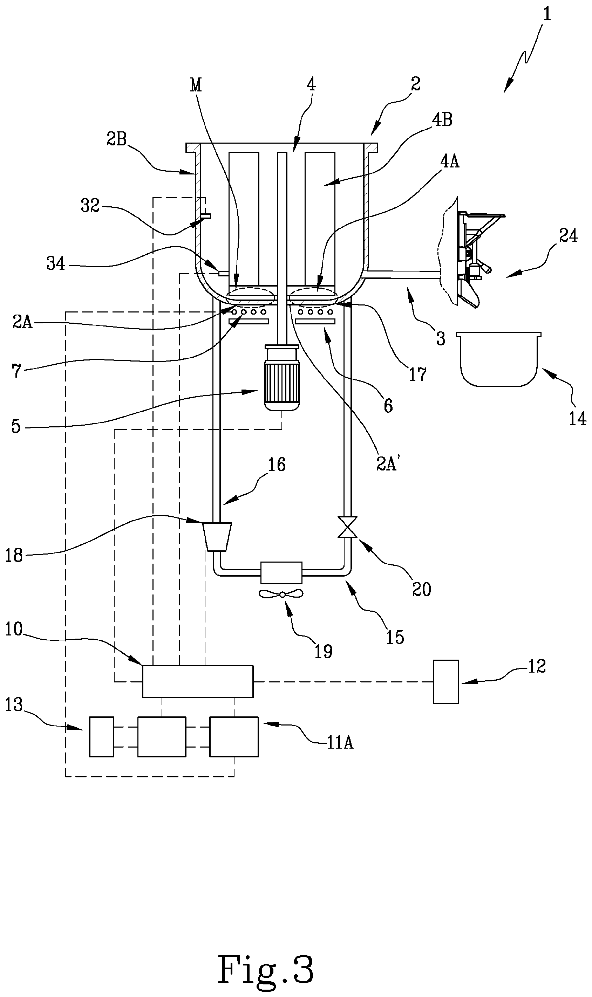

Preferably, the end product is then collected in a tub 14, as illustrated in Figure 2 or 3.

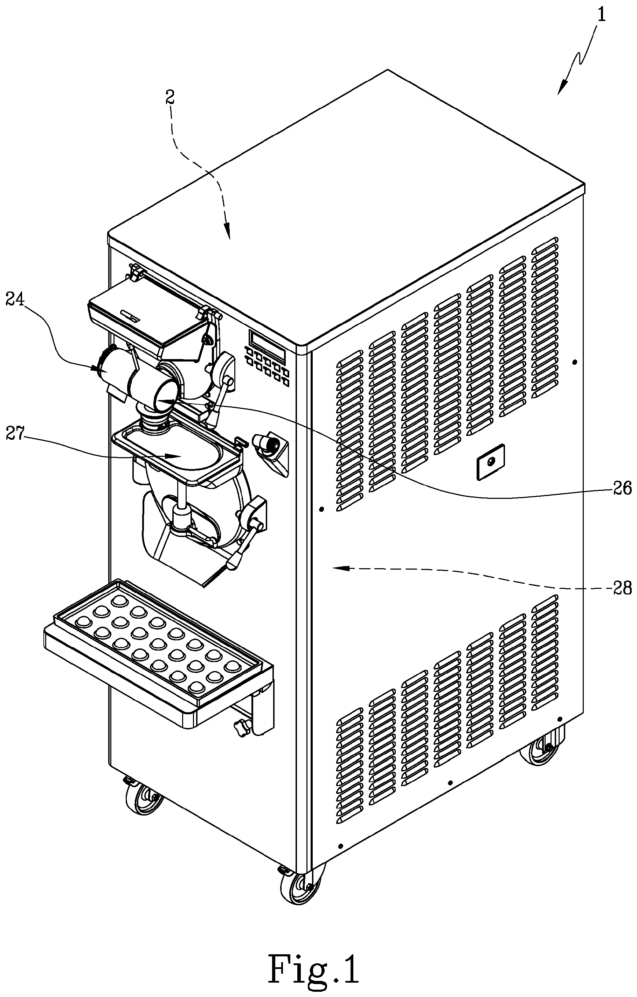

In an embodiment, illustrated in Figure 1, the machine 1 comprises a second container 28, in communication with the container 2 (the containers 2 and 28 are indicated by dashed arrows because they are hidden from view, inside the machine).

For example, the container 2 may be a cooker and the second container 28, a creaming cylinder.

The container 2 and the second container 28 are oriented preferably, but not necessarily, in the same way so as to ensure the compactness of the machine 1.

It should, however, be noted that the container 2, as illustrated in Figures 2 and 3, has a main direction of extension that is vertical.

In the case where both the container 2 and the second container 28 are present, the machine may comprise a dispenser 26 configured for pouring the contents of the container 2 into a hopper 27 leading into the second container 28.

The dispenser 24 and the dispenser 26 comprise respective closing elements, independent of each other (to start or stop dispensing).

The machine 1 comprises a stirrer 4, made at least partly from ferromagnetic material, disposed inside the container 2, and rotating about a mixing axis A to mix the product to be dispensed.

The machine 1 comprises an actuator 5 connected to the stirrer 4 to set the stirrer 4 in rotation about the mixing axis A.

Preferably, the actuator 5 is an electric motor.

The stirrer 4 comprises a first portion 4A which is made from a first, ferromagnetic material.

Advantageously, ferromagnetic materials can be easily magnetized when subjected to a magnetic field.

According to the invention, the first portion 4A is made at least partly from ferritic steel.

According to the invention, the first portion 4A has an austenitic steel coating (which allows increasing the hygiene of the stirrer 4 and improving its durability and ease of cleaning).

The stirrer 4 comprises a second portion 4B made from a material different from the first ferromagnetic material (for example, from a different metal).

The machine 1 comprises an induction element 6.

The induction element 6 comprises one or more wound conductors 7 for generating a magnetic field M when an electric current flows through them. The induction element 6 is disposed outside the processing container 2 so that the magnetic field M generated passes through at least part of the walls 2A, 2B of the processing container 2 to reach the stirrer 4 so as to heat the stirrer 4 by magnetic induction.

Advantageously, heating by magnetic induction allows creating thermal processes of shorter duration compared to other heating methods, while at the same time ensuring higher precision in delivering the thermal power (based on the product being processed).

Advantageously, heating by magnetic induction reduces heating transients, so the product being processed can be brought to the predetermined temperature more quickly.

In other words, this allows turning the heating in the machine 1 on and off very rapidly.

Advantageously, heating by magnetic induction allows ensuring high power density in systems that are particularly compact and reduced in size compared to traditional heating systems comprising a circuit and an evaporator with a heat exchanger fluid flowing in it.

According to the invention and as illustrated in Figure 3, the mixing axis A is vertical and the wall 2A defines a bottom 2A' for the container 2; the induction element 6 is disposed outside the bottom 2A' of the container 2.

In an embodiment, illustrated in Figure 2, which is not according to the claimed invention, the mixing axis A is horizontal and the wall 2A defines a rear 2A" for the container 2; the induction element 6 is disposed outside the rear 2A" of the processing container 2) and is opposite the outlet 3.

The induction element 6 may be a plain, single-winding inductor or a solenoid inductor.

In an embodiment, the induction element 6 is embodied in the form of a plate around which the conductors 7 are wound.

In an embodiment, the induction element 6 comprises a ferrite core.

In this embodiment, the conductors 7 are wound around the ferrite core.

In an embodiment, the conductors 7 are wound to form one or more coils. The conductors 7 are electrical cables made from materials having low electrical resistivity, such as, for example, copper or steel.

The conductor 7, through the (alternating) electromagnetic field M, allows energy to be transferred through the walls of the container 2 to reach the stirrer 4.

When an electrically conductive component, for example, a ferromagnetic material such as, in this case, the portion 4A of the stirrer 4, is placed in the magnetic field M, it absorbs energy in the form of induced electrical current.

The induced electric current, also called eddy current, generates heat on the surface of the ferromagnetic portion 4A on account of the electrical resistance of the material (thereby obtaining what is called the Joule effect).

In other words, an electric current flows through the conductors 7 and generates the electromagnetic field M which is able to produce an induced electric current in the stirrer 4, which is converted into heat by the Joule effect.

Heating occurs in the ferromagnetic portion 4A of the stirrer 4.

Advantageously, a machine which uses magnetic induction heating is guaranteed to be particularly safe because the electromagnetic field affects only the ferromagnetic portion of the stirrer and remains limited to the surface of it.

Moreover, a machine which uses magnetic induction heating is extremely effective and efficient in that the heat conversion performance during heating is particularly high.

Advantageously, the walls (for example, the walls 2A, 2B) of the container 2 are not affected by the heating process and remain cold, thus avoiding the risk of localized burning of the food product inside the container. Indeed, it should be considered that the heating element, that is, the stirrer 4, is kept in rotation during heating: this prevents the product from sticking to it, thereby reducing or abating the risk of localized burning of the food product.

It is noted that the portion 4A of the stirrer 4, which is heated by magnetic induction through the magnetic field M, is immersed in the product to be thermally processed and thus causes the product to be heated.

Advantageously, the heat is produced directly inside the container 2 and there is no heat loss to the surrounding outside space.

Advantageously, heating by induction is a particularly high-performance and fast way of reaching the required heat intensity.

Advantageously, making thermal processes more efficient and rapid translates to energy saving, which allows a reduction in consumption.

Moreover, heating by induction is particularly precise and allows obtaining the required temperature profile.

The machine 1 comprises a control unit 10.

The control unit 10 is configured for controlling and driving the actuator 5. Advantageously, the control unit 10 allows thermal treatment processes to be automated.

Advantageously, automating the processes facilitates the repeatability of the thermal process cycles.

The control unit 10 is configured to start the induction element 6 and the actuator 5 simultaneously to set the stirrer 4 in rotation while it is being heated.

Advantageously, heating and simultaneously moving the stirrer 4 allows thermally processing the product uniformly and without the risk of overheating some parts of the container 2 and burning the end product in contact with the overheated parts and thus spoiling the overall quality.

The machine 1 comprises an electrical power regulating unit 11.

The electrical power regulating unit 11 is driven by the control unit 10.

The unit 11 acts as a variable frequency voltage generator; it converts the fixed voltage of the mains power line to an alternating-current voltage at a required frequency.

The electrical power regulating unit 11 is connected to the induction element 6, specifically to supply electrical power to the conductors 7.

The electrical power regulating unit 11 is configured to supply power to the conductors 7 at a constant effective voltage.

The electrical power regulating unit 11 comprises an inverter 11A.

The inverter 11A is suitably configured for regulating the frequency of the voltage supplied to the conductors 7 as a function of the commands received from the control unit 10.

The inverter 11A therefore allows varying the power transfer by regulating the frequency of the supply voltage (which allows varying the current flowing through the conductors 7 of the induction element 6).

The electrical power regulating unit 11 comprises an ac-to-dc voltage conversion module 11B.

The conversion module 11B is connected to the mains power line by a connector 13.

The module 11B is connected to the input of the inverter 11A to supply dc voltage thereto.

The regulating unit 11 is configured to send electrical power to the conductors 7 according to a plurality of different power levels.

Advantageously, regulating the power according to different levels makes for machine precision and flexibility and ensures that the product is processed at the optimum temperature.

Advantageously, ensuring the optimum temperature is a particularly important aspect, especially for processes used to make bakery and confectionery products.

In an embodiment, the electrical power regulating unit 11 can provide power at between 5 and 30 levels, preferably between 10 and 20 levels.

According to the invention, at least one of the power levels comprises transmitting power in pulsed mode.

In other words, at lower power levels, the system operates intermittently, turning the power supply on and off.

Advantageously, the pulsed mode further contributes to improving the energy efficiency of the machine.

In an embodiment, a number of power levels from 3 to 5 comprises levels in pulsed mode.

According to the invention, at least one of the power levels comprises a booster mode.

Preferably, the booster mode is operational at the last power level.

The booster mode is an operating mode which allows the induction element 6 to absorb the maximum power it is rated for (preferably between 2 kW and 9 kW) for a predetermined time interval.

In an embodiment, the machine 1 comprises a user interface 12 connected to the control unit 10.

The user interface 12 is configured to allow selecting one of the power levels.

The user interface 12 is thus provided with controls (physical or touch buttons or selectors) to allow selecting the power levels.

In an embodiment, the machine 1 comprises a first temperature sensor 32, located inside the container 2, in communication with the control unit 10.

Advantageously, having a sensor 32 inside the container 2 makes it possible to measure the temperature of the product being processed.

In an embodiment, the machine 1 comprises a second temperature sensor 34, located on the stirrer 4, in communication with the control unit 10.

Advantageously, having a sensor 34 on the stirrer 4 allows measuring the temperature of the stirrer, hence sensing the state of the induction element 6 and thereby obtaining a measure of the intensity of the induction heating that is taking place.

Advantageously, having both the sensor 32 and the sensor 34 allows overall control of the thermal process in progress and makes it possible to obtain a measure of the power transfer between the induction element 6 and the stirrer 4 so as to obtain the required temperature profile for the product being processed.

In an embodiment, illustrated for example in Figure 2 or 3, the machine 1 comprises a refrigeration system 15 that is provided with a closed circuit 16 configured to cause a heat exchanger fluid to circulate.

The refrigeration system 15 is optional and its presence allows cooling the food product being processed in the container 2.

Advantageously, it is possible to alternate cycles in which the product is heated (by induction) with cycles in which the product is cooled (by starting the refrigeration system).

Preferably, the refrigeration system 15 comprises an evaporator 17, a compressor18, a condenser 19 and a throttle element 20.

The refrigeration system 15, specifically the compressor 18, is started and controlled by the control unit 10.

The evaporator 17, associated with the container 2, preferably comprises a coil which facilitates heat exchange between the heat exchanger fluid and the container 2.

The throttle element 20 is defined by at least one valve or at least one narrow portion of the circuit 16, configured for generating head losses in the heat exchanger fluid reducing the pressure.

The condenser 19 is preferably an air-cooled condenser.

The heat exchanger fluid flows through the compressor 18, the evaporator 17, the throttle element 20 and the condenser 19, in that order.

This disclosure also has for an object a method for processing a liquid or semi-liquid food product, comprising a step of providing a machine 1 according to at least one of the aforementioned features.

The method comprises at least:
- a step of causing alternating electric current to flow in the conductors 7.
- a step of generating a magnetic field M which passes through a wall of the container 2;
- a step of heating the stirrer 4 with currents generated by the magnetic field M so as to heat the liquid or semi-liquid food product by means of the stirrer 4.

Advantageously, heating by magnetic induction provides optimum control of the temperature at which the process is carried out.

Advantageously, controlling the temperature and making heating uniform enhances the quality of the end product.

The method comprises a step of driving the stirrer 4 simultaneously with the step of heating the stirrer 4.

Advantageously, heating the product and moving the stirrer simultaneously allows thermally processing the product uniformly and without the risk of overheating some parts of the container and burning the end product in contact with the overheated parts and thus spoiling the overall quality.

The step of generating a magnetic field which flows through a wall of the container 2 comprises a step of generating a pulsed magnetic field.

Advantageously, the pulsed mode further contributes to improving the energy efficiency of the machine.

Advantageously, making the processes more effective and reducing their power consumption allows reducing the environmental impact connected therewith.

## Claims

1. A machine (1) for processing liquid or semi-liquid food products, comprising:
- a container (2) for processing liquid or semi-liquid food products and provided with walls (2A, 2B) and an outlet (3);
- a stirrer (4), made at least partly from ferromagnetic material and disposed inside the processing container (2), the stirrer (4) rotating about a mixing axis (A) to mix the product to be dispensed;
- an actuator (5) connected to the stirrer (4) to set the stirrer (4) in rotation about the mixing axis (A),
the machine (1) further comprising an induction element (6) comprising one or more wound conductors (7) for generating a magnetic field (M) when an electric current flows through them,
the induction element (6) being disposed outside the processing container (2) so that the magnetic field (M) generated passes through at least part of the walls (2A, 2B) of the processing container (2) to reach the stirrer (4) and causes heating by magnetic induction, wherein the machine comprises a control unit (10) and an electrical power regulating unit (11) driven by the control unit (10) and connected to the induction element (6) to provide the conductors (7) with electrical power, the power regulating unit (11) is configured to send electrical power to the conductors (7) according to a plurality of different power levels, at least one of the power levels comprising the transmission of power in a pulsed mode, wherein the stirrer (4) comprises a first portion (4A), which is made from a first, ferromagnetic material, and a second portion (4B), which is made from a different material, the first portion (4A) of the stirrer (4) is made at least partly from ferritic steel and wherein the first portion (4A) of the stirrer (4) has an austenitic steel coating and wherein the mixing axis (A) is vertical and the induction element (6) is disposed outside a bottom (2A') of the processing container (2) and wherein the electrical power regulating unit (11) comprises an inverter (11A) configured to regulate a frequency of the electrical voltage to the conductors (7) as a function of the commands received from the control unit (10) and wherein the power regulating unit (11) comprises an ac to dc voltage conversion module (11B) that is connected to the input of the inverter (11A) to supply dc voltage thereto.

2. The machine (1) according to claim 1, wherein the induction element (6) is made in the form of a plate.

3. The machine (1) according to any one of the previous claims, wherein the electrical power regulating unit (11) is configured to supply power to the conductors (7) at a constant effective voltage.

4. The machine (1) according to any of the previous claims, wherein at least one of the power levels comprises a booster mode, which is an operating mode that allows the induction element (6) to absorb a maximum power, preferably between 2 kW and 9 kW, for a predetermined time interval.

5. The machine (1) according to claim 1 or 4, comprising a user interface (12) that is connected to the control unit (10) and configured to allow selecting one of the power levels.

6. The machine (1) according to any one of the preceding claims, comprising a refrigeration system (15) that is provided with a closed circuit (16) configured to cause a heat exchanger fluid to flow through a compressor (18), an evaporator (17) associated with the container (2), a throttle element (20) and a condenser (19), in that order.

7. A method for treating a liquid or semi-liquid food product, comprising a step of providing a machine according to any one of the preceding claims and further comprising the following steps:
- causing alternating electric current to flow in the conductors (7);
- generating a magnetic field (M) which passes through a wall (2) of the container (2);
- heating the stirrer (4) with currents generated by the magnetic field (M) so as to heat the liquid or semi-liquid food product by means of the stirrer (4), and wherein the step of generating a magnetic field (M) which flows through a wall (2A, 2B) of the container (2) comprises a step of generating a pulsed magnetic field.

8. The method according to the preceding claim, comprising a step of driving the stirrer (4) simultaneously with the step of heating the stirrer (4).

## Patentansprüche

1. Maschine (1) zur Verarbeitung von flüssigen oder halbflüssigen Lebensmittelprodukten, umfassend:
- einen Behälter (2) zur Verarbeitung von flüssigen oder halbflüssigen Lebensmittelprodukten und versehen mit Wänden (2A, 2B) und einem Auslass (3);
- ein Rührwerk (4), das zumindest teilweise aus ferromagnetischem Material besteht und in dem Verarbeitungsbehälter (2) angeordnet ist, wobei sich das Rührwerk (4) um eine Mischachse (A) zum Vermischen des auszugebenden Produkts dreht;
- einen Steller (5), der mit dem Rührwerk (4) verbunden ist, um das Rührwerk (4) um die Mischachse (M) in Drehung zu versetzen,
wobei die Maschine (1) zudem ein Induktionselement (6) umfasst, das einen oder mehrere gewundene Leiter (7) umfasst, um ein Magnetfeld (M) zu erzeugen, wenn ein Strom durch sie fließt,
wobei das Induktionselement (6) außerhalb des Verarbeitungsbehälters (2) angeordnet ist, sodass das erzeugte Magnetfeld (M) durch mindestens einen Teil der Wände (2A, 2B) des Verarbeitungsbehälters (2) führt, um das Rührwerk (4) zu erreichen, und ein Erwärmen durch magnetische Induktion herbeiführt, wobei die Maschine eine Steuereinheit (10) und eine Stromregelungseinheit (11) umfasst, die von der Steuereinheit (10) angetrieben wird und mit dem Induktionselement (6) verbunden ist, um die Leiter (7) mit Strom zu versorgen, wobei die Stromregelungseinheit (11) ausgelegt ist, um den Strom gemäß einer Vielzahl von verschiedenen Leistungsstufen an die Leiter (7) zu senden, wobei mindestens eine der Leistungsstufen das Übertragen von Strom auf impulsartige Weise umfasst, wobei das Rührwerk (4) einen ersten Abschnitt (4A) umfasst, der aus einem ersten ferromagnetischen Material besteht, und einen zweiten Abschnitt (4B), der aus einem anderen Material besteht, wobei der erste Abschnitt (4A) des Rührwerks (4) zumindest teilweise aus ferritischem Stahl besteht und wobei der erste Abschnitt (4A) des Rührwerks (4) eine Beschichtung aus austenitischem Stahl aufweist und wobei die Mischachse (A) vertikal ist und das Induktionselement (6) außerhalb einer Unterseite (2A') des Verarbeitungsbehälters (2) angeordnet ist und wobei die Stromregelungseinheit (11) einen Wechselrichter (11A) umfasst, der ausgelegt ist, um eine Frequenz der elektrischen Spannung an die Leiter (7) abhängig von den von der Steuereinheit (10) empfangenen Befehlen zu regeln, und wobei die Stromregelungseinheit (11) ein WSzu-GS-Umwandlungsmodul (11B) umfasst, das mit dem Eingang des Wechselrichters (11A) verbunden ist, um diesen mit Gleichspannung zu versorgen.

2. Maschine (1) nach Anspruch 1, wobei das Induktionselement (6) in der Form einer Platte ausgebildet ist.

3. Maschine (1) nach einem der vorhergehenden Ansprüche, wobei die Stromregelungseinheit (11) ausgelegt ist, um die Leiter (7) mit Strom bei einer konstanten Effektivspannung zu versorgen.

4. Maschine (1) nach einem der vorhergehenden Ansprüche, wobei mindestens eine der Leistungsstufen einen Booster-Modus umfasst, bei dem es sich um einen Betriebsmodus handelt, der dem Induktionselement (6) erlaubt, eine maximale Leistung, vorzugsweise zwischen 2 kW und 9 kW, für einen bestimmten Zeitraum aufzunehmen.

5. Maschine (1) nach Anspruch 1 oder 4, umfassend eine Benutzerschnittstelle (12), die mit der Steuereinheit (10) verbunden und ausgelegt ist, um die Auswahl von einer der Leistungsstufen zu ermöglichen.

6. Maschine (1) nach einem der vorhergehenden Ansprüche, umfassend ein Kühlsystem (15), das mit einem geschlossenen Kreislauf (16) versehen ist, der ausgelegt ist, um zu bewirken, dass ein Wärmetauschermedium durch einen Kompressor (18), einen Verdampfer (17), der mit dem Behälter (2) assoziiert ist, ein Drosselelement (20) und einen Kondensator (19) in dieser Reihenfolge strömt.

7. Verfahren zur Behandlung eines flüssigen oder halbflüssigen Lebensmittelprodukts, umfassend einen Schritt zum Bereitstellen einer Maschine nach einem der vorhergehenden Ansprüche und zudem umfassend die folgenden Schritte:
- Bewirken, dass Wechselstrom in den Leitern (7) fließt;
- Erzeugen eines Magnetfelds (M), das durch eine Wand (2) des Behälters (2) führt;
- Erwärmen des Rührwerks (4) mit durch das Magnetfeld (M) erzeugten Strömen, sodass das flüssige oder halbflüssige Lebensmittelprodukt mittels des Rührwerks (4) erwärmt wird, und wobei der Schritt zum Erzeugen eines Magnetfelds (M), das durch eine Wand (2A, 2B) des Behälters (2) fließt, einen Schritt zum Erzeugen eines impulsartigen Magnetfelds umfasst.

8. Verfahren nach dem vorhergehenden Anspruch, umfassend einen Schritt zum Antreiben des Rührwerks (4) gleichzeitig mit dem Schritt zum Erwärmen des Rührwerks (4).

## Revendications

1. Machine (1) de traitement de produits alimentaires liquides ou semi-liquides, comprenant :
- un récipient (2) de traitement de produits alimentaires liquides ou semi-liquides et muni de parois (2A, 2B) et d'une sortie (3) ;
- un agitateur (4), réalisé au moins partiellement à partir de matériau ferromagnétique et disposé à l'intérieur du récipient de traitement (2), l'agitateur (4) tournant autour d'un axe de mélange (A) pour mélanger le produit à distribuer ;
- un actionneur (5) relié à l'agitateur (4) pour mettre l'agitateur (4) en rotation autour de l'axe de mélange (A),
la machine (1) comprenant en outre un élément d'induction (6) comprenant un ou plusieurs conducteurs (7) enroulés pour générer un champ magnétique (M) lorsqu'un courant électrique les traverse,
l'élément d'induction (6) étant disposé à l'extérieur du récipient de traitement (2) de sorte que le champ magnétique (M) généré traverse au moins une partie des parois (2A, 2B) du récipient de traitement (2) pour atteindre l'agitateur (4) et provoque un chauffage par induction magnétique, dans laquelle la machine comprend une unité de commande (10) et une unité de régulation de puissance électrique (11) entraînée par l'unité de commande (10) et reliée à l'élément d'induction (6) pour fournir de la puissance électrique aux conducteurs (7), l'unité de régulation de puissance (11) est configurée pour envoyer de la puissance électrique aux conducteurs (7) en fonction d'une pluralité de niveaux de puissance différents, au moins l'un des niveaux de puissance comprenant la transmission de puissance dans un mode pulsé, dans laquelle l'agitateur (4) comprend une première portion (4A), qui est réalisée à partir d'un premier matériau ferromagnétique, et une seconde portion (4B), qui est réalisée à partir d'un matériau différent, la première portion (4A) de l'agitateur (4) est réalisée au moins partiellement à partir d'acier ferritique et dans laquelle la première portion (4A) de l'agitateur (4) a un revêtement d'acier austénitique et dans laquelle l'axe de mélange (A) est vertical et l'élément d'induction (6) est disposé à l'extérieur d'un fond (2A') du récipient de traitement (2) et dans laquelle l'unité de régulation de puissance électrique (11) comprend un onduleur (11A) configuré pour réguler une fréquence de la tension électrique vers les conducteurs (7) en fonction des commandes reçues de l'unité de commande (10) et dans laquelle l'unité de régulation de puissance (11) comprend un module de conversion de tension CA en CC (11B) qui est relié à l'entrée de l'onduleur (11A) pour lui fournir une tension CC.

2. Machine (1) selon la revendication 1, dans laquelle l'élément d'induction (6) est réalisé sous la forme d'une plaque.

3. Machine (1) selon l'une quelconque des revendications précédentes, dans laquelle l'unité de régulation de puissance électrique (11) est configurée pour fournir de la puissance aux conducteurs (7) à une tension effective constante.

4. Machine (1) selon l'une quelconque des revendications précédentes, dans laquelle au moins l'un des niveaux de puissance comprend un mode booster, qui est un mode de fonctionnement qui permet à l'élément d'induction (6) d'absorber une puissance maximale, de préférence entre 2 kW et 9 kW, pendant un intervalle de temps prédéterminé.

5. Machine (1) selon la revendication 1 ou 4, comprenant une interface utilisateur (12) qui est reliée à l'unité de commande (10) et configurée pour permettre de sélectionner l'un des niveaux de puissance.

6. Machine (1) selon l'une quelconque des revendications précédentes, comprenant un système de réfrigération (15) qui est pourvu d'un circuit fermé (16) configuré pour amener un fluide d'échangeur de chaleur à s'écouler à travers un compresseur (18), un évaporateur (17) associé au récipient (2), un élément d'étranglement (20) et un condenseur (19), dans cet ordre.

7. Procédé de traitement d'un produit alimentaire liquide ou semi-liquide, comprenant une étape de fournir une machine selon l'une quelconque des revendications précédentes et comprenant en outre les étapes suivantes :
- provoquer la circulation du courant électrique alternatif dans les conducteurs (7) ;
- générer un champ magnétique (M) qui traverse une paroi (2) du récipient (2) ;
- chauffer l'agitateur (4) avec des courants générés par le champ magnétique (M) de manière à chauffer le produit alimentaire liquide ou semi-liquide au moyen de l'agitateur (4), et dans lequel l'étape consistant à générer un champ magnétique (M) qui traverse une paroi (2A, 2B) du récipient (2) comprend une étape consistant à générer un champ magnétique pulsé.

8. Procédé selon la revendication précédente, comprenant une étape consistant à entraîner l'agitateur (4) simultanément à l'étape consistant à chauffer l'agitateur (4).
